Europäisches Patentamt

European Patent Office

Office européen des brevets

(19)

(11) Publication number: **0 187 532**
A2

(12) # EUROPEAN PATENT APPLICATION

(21) Application number: 85309497.7

(51) Int. Cl.⁴: **H 04 N 9/80**

(22) Date of filing: 24.12.85

(30) Priority: 29.12.84 JP 276826/84

(43) Date of publication of application:
16.07.86 Bulletin 86/29

(84) Designated Contracting States:
AT DE FR GB NL

(71) Applicant: SONY CORPORATION
7-35 Kitashinagawa 6-Chome Shinagawa-ku
Tokyo 141(JP)

(72) Inventor: Urata, Kaoru c/o Patents Division
Sony Corporation 6-7-35 Kitashinagawa
Shinagawa-ku Tokyo 141(JP)

(74) Representative: Thomas, Christopher Hugo et al,
D Young & Co 10 Staple Inn
London WC1V 7RD(GB)

(54) Video signal reproducing apparatus.

(57) A video signal reproducing apparatus reproduces a video signal which has been recorded by a plurality of component signals forming the video signal having been time-base-compressed, modulated and then recorded on the recording medium (4). The apparatus includes a head (Hb) reading the time-base-compressed component signals, a demodulator (14) demodulating the read-out time-base-compressed component signals, a drop-out detector (17) detecting a drop-out in the read-out time-base-compressed component signals and producing a drop-out signal, an adder (31) superimposing the drop-out signal upon the demodulated time-base-compressed component signals, a time-base-expander (15) expanding the time bases of the time-base-compressed component signals and that of the drop-out signal derived from the adder (31) and producing a plurality of component signals and a drop-out signal the time bases of which have been expanded to normal, a drop-out signal detector (30) detecting the superimposed drop-out signal with the plurality of time-base-expanded component signals, a signal compensator (20) replacing the plurality of component signals by preceding component signals when the drop-out signal is detected by the drop-out signal detector (30), and a signal processor (26) obtaining a reproduced video signal from the plurality of component signals passed through the signal compensator (20), wherein the drop-out signal is time-base-expanded by the time-base-expander (15) so as to have the ordinary time base, the same as that of the demodulated signal.

./...

FIG. 4

1

# VIDEO SIGNAL REPRODUCING APPARATUS

This invention relates to video signal reproducing apparatus.

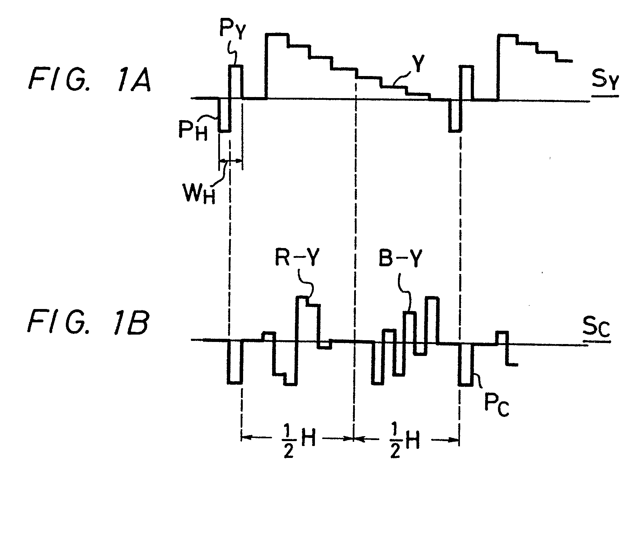

For a video recording and reproducing apparatus with a camera integral therewith, and for other video recording and reproducing apparatus (VTR), there has been proposed a recording and reproducing system (see the published document of Japanese patent application unexamined No. 56/134891) in which a colour video signal is separated into a luminance signal and a pair of component chrominance signals, and they are then respectively recorded in different tracks. With this recording and reproducing system, a pair of component chrominance signals, for example, a pair of colour difference signals R-Y and B-Y are time-base-compressed to one half and time division multiplexed as shown in Figure 1B of the accompanying drawings, and the time-base-compressed chrominance signals (hereinafter referred to as compressed colour difference signals) are recorded on the track adjacent to a recording track of a luminance signal Y.

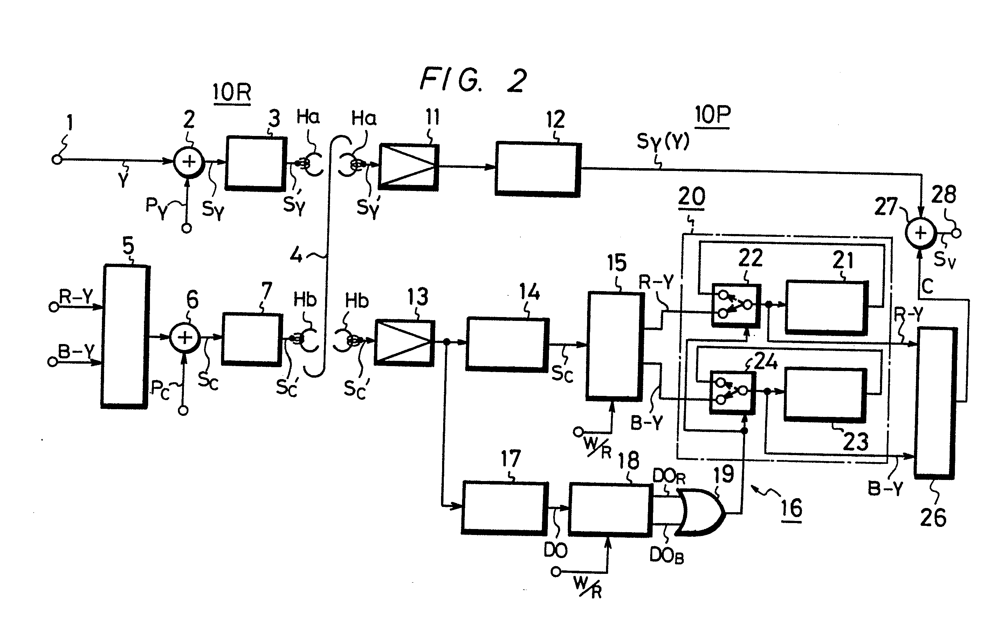

Figure 2 of the accompanying drawings is a block diagram of a practical example of a recording and reproducing apparatus which can realize such a recording and reproducing system.

A recording system 10R will be described first. A luminance signal Y containing a horizontal synchronizing signal PH, and supplied to a terminal 1 has added a first synchronizing signal (pulse) PY, used for matching the time between channels, by an adder 2. As shown in Figure 1A of the accompanying drawings, the synchronizing pulse PY is inserted into and added to, for example, the latter half portion of the horizontal synchronizing pulse PH, with the polarity opposite to that of the synchronizing pulse PH.

The reason why the synchronizing pulse PY with positive polarity is inserted into the latter half of the horizontal synchronizing pulse PH, is to facilitate the synchronizing separation of the pulse PY, and to prevent a spurious addition to the low frequency band component of the luminance signal Y, due to the pulse PY, thereby avoiding the occurrence of moiré.

WH denotes the pulse width of the pulse PH, and, in this example, the pulse width of the synchronizing pulse PY is selected to be WH/2.

The luminance signal SY having the synchronizing pulse PY inserted, is frequency-modulated by an angular modulator, for example, an FM modulator 3 to form the frequency-modulated luminance signal SY, and is then recorded on a magnetic medium, for example, a tape 4, by a head Ha.

On the other hand, the red and blue colour difference signals R-Y and B-Y are time-base-compressed to one half by a time-base-compressor 5, and then time division multiplexed. The compressed signals R-Y and B-Y have added a second synchronizing signal (pulse) Pc by an adder 6, forming a compressed colour difference signal Sc shown in Figure 1B.

In order for the second synchronizing pulse Pc to be used for matching the time between the channels, it is inserted into the compressed colour difference signals R-Y and B-Y at the same time position as the time position at which the first synchronizing pulse PY is inserted. In this example, the second synchronizing pulse Pc is inserted with negative polarity.

The compressed colour difference signal Sc is frequency-modulated by an FM modulator 7 to form a frequency-modulated colour difference signal Sc', and then recorded on the tape 4 by a head Hb. In this case, a recording track for the compressed colour difference signals is formed so as to adjoin the recording track for the luminance signal SY.

In a reproducing system 10P, the luminance signal SY' reproduced by the head Ha is supplied through an amplifier 11 to a demodulator 12, and thereby frequency-demodulated.

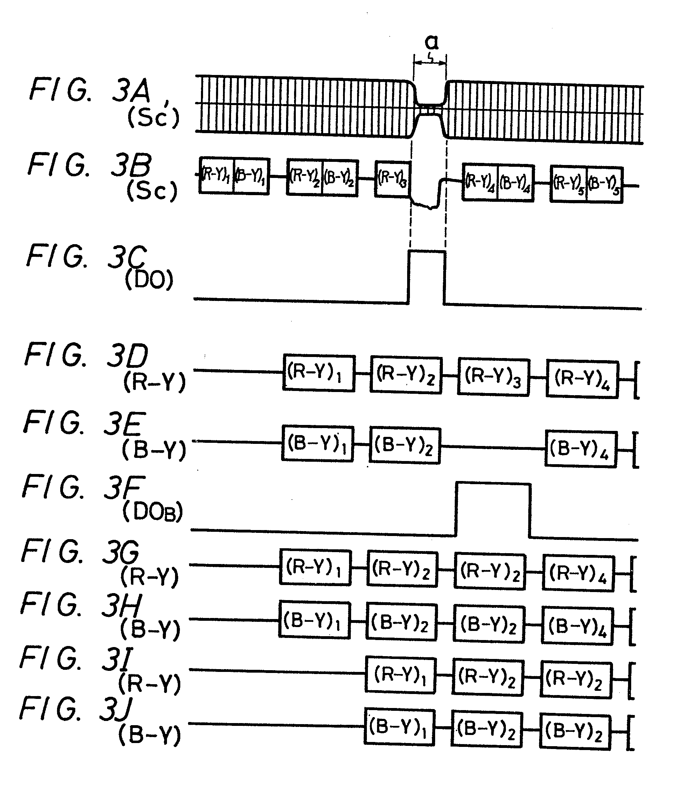

In like manner, the compressed colour difference signal Sc' (shown in Figure 3A) of the accompanying drawings reproduced by the head Hb is supplied through an amplifier 13 to a demodulator 14, and thereby frequency-demodulated to be the signal Sc (Figure 3B of the accompanying drawings). The demodulated signal Sc is time-base-expanded by two by a time-base-expander 15 and a pair of colour difference signals R-Y and B-Y are produced at the same timing. At that time, since the time-base-expander 15 is supplied to a read clock, the time base of which is constant, the time-base-expander 15 generates the colour difference signals R-Y and B-Y, the reproduced jitter components of which are removed (Figures 3D and 3E) of the accompanying drawings.

The pair of colour difference signals R-Y and B-Y are fed to a signal compensator circuit 20 which forms a drop-out compensator circuit 16. The compensator circuit 20 is provided for the respective transmission systems of the pair of colour difference signals R-Y and B-Y. In this example, the compensator circuit 20 is formed of 1H (H is the horizontal period) delay circuits 21 and 23, and switching circuits 22 and 24. The switching circuit 22 is supplied with the red colour difference signal R-Y derived from the time-base-expander 15 and the output signal from the delay circuit 21, while the output signal from the switching circuit 22 is supplied to the delay circuit 21.

Similarly, the other switching circuit 24 is supplied with the blue colour difference signal B-Y derived from the time base expander 15, and the output signal from the delay circuit 23, while the output signal from the switching circuit 24 is supplied to the delay circuit 23.

When a drop-out occurs, the pair of switching circuits 22 and 24 are supplied with a switching pulse (drop-out compensating pulse) which is used to replace the colour difference signal with the drop-out by the colour difference signal 1H before. To this end, the frequency modulated and compressed colour difference signal Sc' passed through the amplifier 13 is further supplied to a drop-out detector circuit 17, which generates a drop-out pulse DO shown in Figure 3C, when it contains a drop-out. The drop-out pulse DO is supplied to a time base expander 18 in which the time base of the drop-out pulse DO is expanded by two (Figure 3F).

Since the time base expander 18 generates a drop-out pulse corresponding to a drop-out interval, if a drop-out occurs in, for example, an interval a shown in Figure 3A, only the blue colour difference signal B-Y in the compressed colour difference signal Sc' is dropped out, so that the time base expander 18 generates only a drop-out compensating pulse DOB for the colour difference signal B-Y.

Drop-out compensating pulses DOR and DOB from the time base expander 18 are supplied through an OR circuit 19 to the pair of switching circuits 22 and 24 commonly, whereby the drop-out is compensated for both the colour difference signals, simultaneously (Figures 3G and 3H).

The reason why the red colour difference signal R-Y is also simultaneously compensated for even when the drop-out occurs in only the blue colour difference signal B-Y will be explained. That is, if the red colour difference signal R-Y is not compensated for by the colour difference signal on the same horizontal line but only the blue colour difference signal B-Y is compensated for by the blue colour difference signal B-Y 1H before, colour display is carried out by colour difference signals of different horizontal lines, and hence there is then a risk that depending on the picture images, a hue is disturbed, and accordingly the quality of picture will be deteriorated.

A reproducing apparatus in which a pair of colour difference signals are both compensated for simultaneously has already been proposed by us (see, for example, the specification of Japanese patent application No. 58/62750).

The pair of colour difference signals R-Y and B-Y whose drop-out is compensated for are supplied to an encoder 26, and thereby converted to a chrominance signal C. The chrominance signal C and the above-mentioned luminance signal Y are supplied to a composer or synthesizer 27 so that a video signal SV of the signal format according to the standard system is developed at a terminal 28.

A pair of colour difference signals R-Y and B-Y shown in Figures 3I and 3J of the accompanying drawings are the output signals derived from the delay circuits 21 and 23, respectively.

In this recording and reproducing apparatus, when the drop-out is compensated for by the manner described above, the drop-out pulse DO is time-base-expanded once and then the drop-out is compensated for by using such drop-out pulse DO. This requires the reproducing system 10P to have the time-base-expander 18 for the drop-out pulse, in addition to the time-base-expander 15 for the colour difference signals. When charge transfer elements such as charge coupled devices (CCDs) are used as the time-base-expanders 15 and 18, at least two CCDs must be provided for one pair of colour difference signals R-Y and B-Y, thus complicating the circuit.

Moreover, the timing at which the drop-out should be compensated for must be controlled accurately, otherwise the drop-out compensation cannot be carried out at the correct position. This makes a read clock control system for the time base expander 18 complicated in construction.

According to the present invention there is provided a video signal reproducing apparatus in which a plurality of component signals forming a video signal are time-base-compressed, modulated, and then recorded on a recording medium, and the video signal is reproduced from the time-base-compressed component signals recorded on the recording medium, the apparatus comprising:

reading means for reading said time-base-compressed component signals from said recording medium;

demodulating means for demodulating said read-out time-base-compressed component signals; and

drop-out detecting means for detecting a drop-out of said read-out time-base-compressed component signals and producing a drop-out signal;

characterised by:

adding means for superimposing said drop-out signal upon said demodulated time-base-compressed component signals;

time-base-expanding means for expanding the time bases of said time-base-compressed component signals and that of said drop-out signal derived from said adding means and producing a plurality of component signals and a drop-out signal, the time bases of which are expanded to normal;

drop-out signal detecting means for detecting said superimposed drop-out signal superimposed on said plurality of time-base-expanded component signals;

signal compensating means for replacing said plurality of component signals by preceding component signals when said drop-out signal is detected by said drop-out signal detecting means; and

signal processing means for obtaining a reproduced video signal from said plurality of component signals passed through said signal compensating means;

wherein said drop-out signal is time-base-expanded by said time-base-expanding means so as to have the same time base as that of said demodulated signal.

According to the present invention there is also provided a video signal reproducing apparatus in which a luminance signal forming a video signal is recorded on a first recording track of a magnetic tape and a pair of component chrominance signals thereof are respectively time-base-compressed and alternately recorded on a second recording track of said magnetic tape, and said video signal is reproduced from said magnetic tape, the apparatus comprising:

first reading means for reading said luminance signal from said first recording track;

first demodulating means for demodulating said read-out luminance signal;

second reading means for reading said pair of component chrominance signals from said second recording track;

second demodulating means for demodulating said pair of read-out component chrominance signals;

drop-out detecting means for detecting a drop-out of said pair of read-out component chrominance signals and producing a drop-out signal;

characterised by:

adding means for superimposing said drop-out signal upon said pair of demodulated component chrominance signals;

time-base-expanding means for time-base-expanding said pair of component chrominance signals and said drop-out signal derived from said adding means, and producing a pair of component chrominance signals and a drop-out signal the time bases of which are expanded to normal;

drop-out signal detecting means for detecting said superimposed drop-out detecting signal superimposed on said pair of time-base-expanded component chrominance signals;

signal compensating means for replacing said pair of component chrominance signals with a pair of preceding component chrominance signals when said drop-out signal is detected by said drop-out signal detecting means;

first signal processing means for obtaining a chrominance signal from said pair of component chrominance signals passed through said signal compensating means; and

second signal processing means for obtaining a reproduced video signal from said chrominance signal and said luminance signal derived from said first demodulating means.

Thus, in embodiments of the present invention, in the stage of the time-base-compressed colour difference signal with the time base compressed, the drop-out pulse is superimposed upon the time-base-compressed colour difference signal. To this end, an adder for the drop-out pulse is provided in the stage prior to the time-base-expander.

After the drop-out pulse has been time-base-expanded, it is again detected from the pair of colour difference signals R-Y and B-Y. Since the time base of this drop-out pulse DO has already been expanded to the original time base, this drop-out pulse is directly supplied to a pair of switching circuits.

Consequently, since in the former drop-out detector circuit, the drop-out of the time-base-compressed colour difference signal is detected with the time base thereof compressed, the time base of this drop-out pulse is also compressed. Accordingly, if this drop-out pulse and the time-base-compressed colour difference signal are time-base-expanded simultaneously, the separate time-base-expander for time-base-expanding the drop-out pulse becomes unnecessary, and the clock control system therefor also becomes unnecessary.

The invention will now be described by way of example with reference to the accompanying drawings, throughout which like parts are referred to by like references, and in which:

Figures 1A and 1B are waveform diagrams of a video signal;

Figure 2 is a block diagram of an example of a previously proposed recording and reproducing apparatus;

Figures 3A to 3J are timing diagrams for explaining the operation of the recording and reproducing apparatus of Figure 2;

Figure 4 is a block diagram showing an embodiment of video signal reproducing apparatus according to this invention; and

Figures 5A to 5K are timing diagrams for explaining the operation of the embodiment of Figure 4.

The embodiment is applied to a recording and reproducing apparatus in which a pair of colour difference signals are time-base-compressed, and then recorded together with the luminance signal on the recording track adjacent to the recording track of the luminance signal, simultaneously as described above.

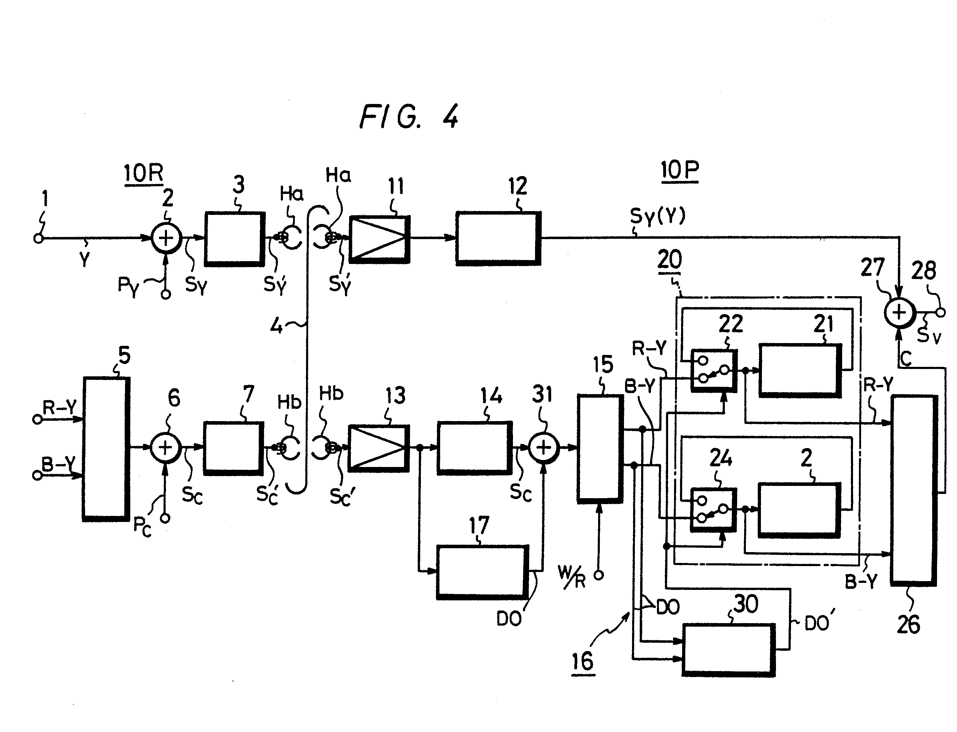

Referring to Figure 4, a signal adder 31 is provided at the stage prior to the time-base-expander 15 and the drop-out pulse DO derived from the first drop-out detector circuit 17 is supplied to the adder 31.

The pair of colour difference signals R-Y and B-Y derived from the time-base-expander 15 are fed to a second drop-out detector circuit 30, in which a time-base-expanded drop-out pulse DO' is detected from the pair of time-base-expanded colour difference signals R-Y and B-Y. This drop-out pulse DO' is supplied commonly to the switching circuits 22 and 24 that are provided within the signal compensator circuit 20.

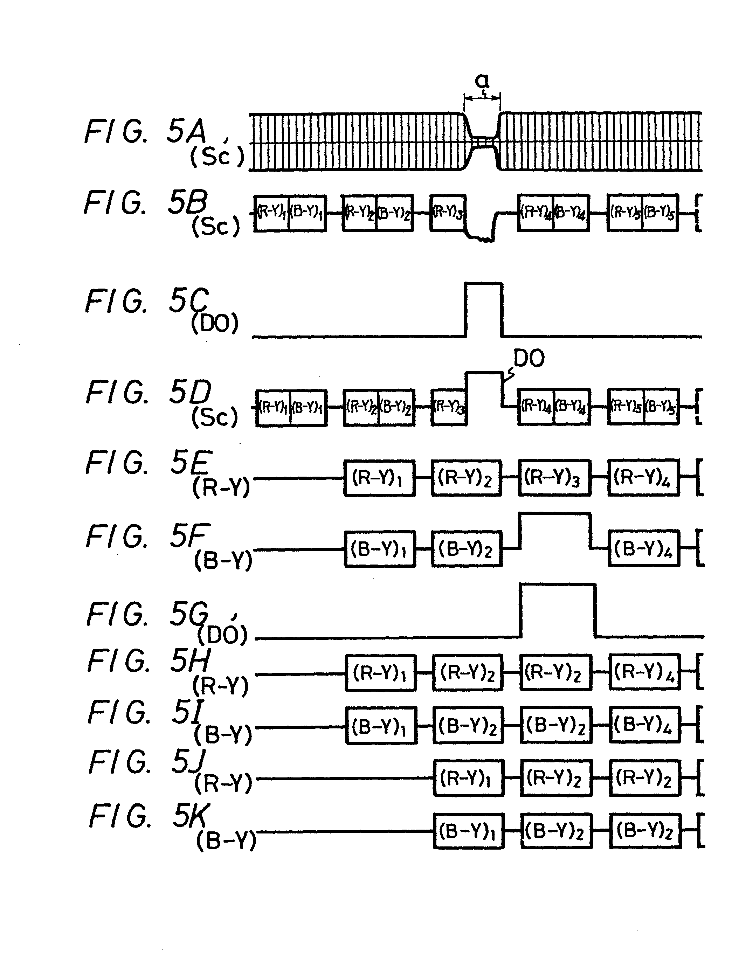

The operation will be described with reference to Figures 5A to 5K.

The compressed colour difference signal Sc' (Figure 5a) reproduced by the head Hb is frequency-demodulated by the demodulator 14, and thereby the compressed colour difference signal Sc is produced as shown in Figure

8

0187532

5B. The compressed colour difference signal Sc' is also fed through the amplifier 13 to the first drop-out detector circuit 17 in which the drop-out thereof is detected. When a drop-out occurs in the interval a shown in Figure 5A, the demodulated level of the compressed colour signal Sc is lowered considerably as compared with the signal level as shown in Figure 5B, so that in response to the interval a, the drop-out pulse DO shown in Figure 5C is detected.

This drop-out pulse DO is added to the compressed colour difference signal Sc that was frequency-modulated, at the adder 31. The position at which the drop-out pulse DO is added to the signal Sc is synchronized with the interval a where the drop-out occurs. Since the drop-out pulse DO has an output level sufficiently higher than the compressed colour difference signal Sc when frequency-demodulated, the compressed colour difference signal Sc supplied from the adder 31 becomes as shown in Figure 5D. The compressed colour difference signal Sc with the drop-out pulse DO added is simultaneously time-base-expanded to have the original time base by the time-base-expander 15 at the next stage, so that the pair of colour difference signals R-Y and B-Y are supplied from the time-base-expander 15 in such a manner that as shown in Figures 5E and 5F, the drop-out pulse DO is superimposed only upon the blue colour difference signal B-Y corresponding to the interval a in which the drop-out occurred.

When the pair of colour difference signals R-Y and B-Y are supplied to the second drop-out detector circuit 30, the drop-out pulse DO' shown in Figure 5G is detected by a level detector (not shown) provided within the drop-out detector circuit 30. By this drop-out pulse DO', the pair of switching circuits 22 and 24 are connected in the positions opposite to the illustrated positions, whereby colour difference signals R-Y and B-Y 1H before, as shown in Figures 5H and 5I, are supplied only during the interval a thereby to carry out the compensation of the signal (Figures 5J and 5K).

Thus, since the time base of the compressed colour difference signal Sc and that of the drop-out pulse DO are expanded together, the separate time-base-expander for the drop-out pulse is not required, with consequent circuit simplification.

Moreover, since the control system for the time-base-expander becomes unnecessary, it is possible to compensate for the signal in the drop-out interval a without using an expensive control system.

When a drop-out occurs, during the drop-out interval $\underline{a}$, the pair of colour difference signals are compensated for by the colour difference signals 1H before, so that change of the hue due to the signal compensation can be prevented from being conspicuous.

Accordingly, embodiments of the invention are very suitable for application to a recording and reproducing apparatus in which a pair of component chrominance signals are time-base-compressed and recorded together with a luminance signal on the recording track adjacent to the recording track for the luminance signal, and particularly to a recording and reproducing apparatus of a portable type.

## CLAIMS

1. A video signal reproducing apparatus in which a plurality of component signals forming a video signal are time-base-compressed, modulated, and then recorded on a recording medium (4), and the video signal is reproduced from the time-base-compressed component signals recorded on the recording medium (4), the apparatus comprising:

reading means (Hb) for reading said time-base-compressed component signals from said recording medium (4);

demodulating means (14) for demodulating said read-out time-base-compressed component signals; and

drop-out detecting means (17) for detecting a drop-out of said read-out time-base-compressed component signals and producing a drop-out signal;

characterised by:

adding means (31) for superimposing said drop-out signal upon said demodulated time-base-compressed component signals;

time-base-expanding means (15) for expanding the time bases of said time-base-compressed component signals and that of said drop-out signal derived from said adding means (31) and producing a plurality of component signals and a drop-out signal, the time bases of which are expanded to normal;

drop-out signal detecting means (30) for detecting said superimposed drop-out signal superimposed on said plurality of time-base-expanded component signals;

signal compensating means (20) for replacing said plurality of component signals by preceding component signals when said drop-out signal is detected by said drop-out signal detecting means (30); and

signal processing means (26) for obtaining a reproduced video signal from said plurality of component signals passed through said signal compensating means (20);

wherein said drop-out signal is time-base-expanded by said time-base-expanding means (15) so as to have the same time base as that of said demodulated signal.

2. Apparatus according to claim 1 wherein said drop-out signal detecting means (30) includes level comparing means thereby to detect said drop-out signal having a higher level than said plurality of component signals.

3.    Apparatus according to claim 1 wherein said signal compensating means (20) includes memory means (21,23) for temporarily storing said component signals derived from said time-base-expanding means (15), and switching means (22,24) for selectively switching an output signal from said memory means (21,23) and an output signal from said time-base-expanding means (15), whereby when said drop-out signal is detected by said drop-out signal detecting means (30), said switching means (22,24) selects the output signal of said memory means (21,23) and supplies it to said signal processing means (26).

4.    Apparatus according to claim 1 wherein when said drop-out detecting means (17) detects a drop-out, said drop-out detecting means (17) produces said drop-out signal having a width the same as that of said time-base-compressed component signal, and said drop-out signal is added to said time-base-compressed component signal at its portion where said drop-out has occurred by said adding means (31), and, after said time-base-compressed component signal and said drop-out signal have been time-base-expanded, when said drop-out signal is detected, a signal portion corresponding to said drop-out signal is replaced with said preceding component signal by said drop-out signal which has been time-base-expanded with a width corresponding to said component signal whose time base has been expanded to normal, in said signal compensating means (20).

5.    A video signal reproducing apparatus in which a luminance signal forming a video signal is recorded on a first recording track of a magnetic tape (4) and a pair of component chrominance signals thereof are respectively time-base-compressed and alternately recorded on a second recording track of said magnetic tape (4), and said video signal is reproduced from said magnetic tape (4), the apparatus comprising:
first reading means (Ha) for reading said luminance signal from said first recording track;
first demodulating means (12) for demodulating said read-out luminance signal;
second reading means (Hb) for reading said pair of component chrominance signals from said second recording track;

second demodulating means (14) for demodulating said pair of read-out component chrominance signals;

drop-out detecting means (17) for detecting a drop-out of said pair of read-out component chrominance signals and producing a drop-out signal;

characterised by:

adding means (31) for superimposing said drop-out signal upon said pair of demodulated component chrominance signals;

time-base-expanding means (15) for time-base-expanding said pair of component chrominance signals and said drop-out signal derived from said adding means (31), and producing a pair of component chrominance signals and a drop-out signal the time bases of which are expanded to normal;

drop-out signal detecting means (30) for detecting said superimposed drop-out detecting signal superimposed on said pair of time-base-expanded component chrominance signals;

signal compensating means (20) for replacing said pair of component chrominance signals with a pair of preceding component chrominance signals when said drop-out signal is detected by said drop-out signal detecting means (30);

first signal processing means (26) for obtaining a chrominance signal from said pair of component chrominance signals passed through said signal compensating means (20); and

second signal processing means (27) for obtaining a reproduced video signal from said chrominance signal and said luminance signal derived from said first demodulating means (12).

0187532

FIG. 1A

FIG. 1B

FIG. 2

FIG. 3A (Sc)

FIG. 3B (Sc)

FIG. 3C (DO)

FIG. 3D (R-Y)

FIG. 3E (B-Y)

FIG. 3F (DOB)

FIG. 3G (R-Y)

FIG. 3H (B-Y)

FIG. 3I (R-Y)

FIG. 3J (B-Y)

0187532

FIG. 4

0187532

FIG. 5A
(Sc)

FIG. 5B
(Sc)

(R-Y)₁ (B-Y)₁   (R-Y)₂ (B-Y)₂   (R-Y)₃   (R-Y)₄ (B-Y)₄   (R-Y)₅ (B-Y)₅

FIG. 5C
(DO)

FIG. 5D
(Sc)

DO

(R-Y)₁ (B-Y)₁   (R-Y)₂ (B-Y)₂   (R-Y)₃   (R-Y)₄ (B-Y)₄   (R-Y)₅ (B-Y)₅

FIG. 5E
(R-Y)

(R-Y)₁   (R-Y)₂   (R-Y)₃   (R-Y)₄

FIG. 5F
(B-Y)

(B-Y)₁   (B-Y)₂   (B-Y)₄

FIG. 5G
(DO)

FIG. 5H
(R-Y)

(R-Y)₁   (R-Y)₂   (R-Y)₂   (R-Y)₄

FIG. 5I
(B-Y)

(B-Y)₁   (B-Y)₂   (B-Y)₂   (B-Y)₄

FIG. 5J
(R-Y)

(R-Y)₁   (R-Y)₂   (R-Y)₂

FIG. 5K
(B-Y)

(B-Y)₁   (B-Y)₂   (B-Y)₂